# DEMANDE DE BREVET EUROPEEN

(11) **EP 1 914 377 A2**
(43) Date de publication de la demande: **23.04.2008**
(21) Numéro de dépôt: 07301463.1
(22) Date de dépôt: 15.10.2007
(51) Int. Cl.: E06B 9/17, E06B 9/88, F16P 3/12, E05F 15/00

(54) **Profilé d'extrémité de tablier de dispositif de protection**

(30) Priorité: 19.10.2006 FR 0654356
(71) Demandeur: BUBENDORFF Société Anonyme, 68220 Attenschwiller (FR)
(72) Inventeur: Evreux, Gérard, 74130 Ayze (FR); Jacquin, Dominique, 68130 Carspach (FR); Blanpain, Roland, 38380 Entre deux Guiers (FR); Beranger, Marc, 38410 St Martin d'Uriage (FR)
(74) Mandataire: Rhein, Alain

(57) **Abrégé**

L'invention concerne un profilé d'extrémité (11) équipant un tablier (4) de dispositif de protection (1) du type porte de garage, store, volet roulant, moustiquaire ou analogue et comportant deux extrémités latérales (12; 12A), dont l'une (12) reçoit un dispositif électrique (14) tandis que l'autre (12A) reçoit un second dispositif électrique (14A), ainsi que des moyens (16) pour acheminer une information électrique d'un dispositif électrique (14) à l'autre (14A).

Ce profilé d'extrémité (11) est caractérisé par le fait qu'il constitue, en soi, au moins un conducteur électrique (17; 17A) définissant, au moins en partie, les moyens (16) pour acheminer une information électrique.

## Description

La présente invention a trait à un profilé d'extrémité équipant un tablier de dispositif de protection du type porte de garage, store, volet roulant, moustiquaire ou analogue.

Cette invention concerne le domaine de la fabrication des dispositifs conçus pour équiper un bâtiment, plus particulièrement un bâtiment d'habitation, et destinés à assurer un certain type de protection. Un tel dispositif peut, en fait et de manière non limitative, se présenter sous la forme d'un dispositif de protection contre le rayonnement solaire comme un store ou analogue, sous la forme d'un dispositif de protection contre les animaux nuisibles comme une moustiquaire ou similaire, voire encore sous la forme d'un dispositif de protection contre l'intrusion (comme une porte de garage ou analogue) et/ou contre la lumière du jour comme un volet roulant ou autre, associé à une porte, fenêtre ou analogue.

De manière connue en soi, un tel dispositif de protection comporte un tablier présentant une première extrémité rendue solidaire d'un arbre d'enroulement entraîné en rotation, notamment par le biais d'un moteur électrique, autour duquel s'enroule et à partir duquel se déroule ledit tablier. Ce dernier présente une seconde extrémité, usuellement dénommée extrémité libre, et équipée d'un profilé d'extrémité qui, en cours de déploiement de ce tablier, est susceptible d'entrer en contact avec un obstacle, notamment le seuil d'une porte ou analogue.

Un tel dispositif de protection peut, avantageusement, être équipé d'un dispositif électrique constitué, soit par un détecteur de fin de course, soit par un détecteur d'obstacle ou analogue, et conçus pour, en cas de détection d'une telle fin de course ou d'un tel obstacle, commander l'arrêt du moteur électrique d'entraînement de l'arbre. Un tel dispositif électrique est, usuellement, implanté, au moins en partie, au niveau d'une extrémité latérale du profilé d'extrémité et est raccordé, voire directement associé, à un moyen (notamment un émetteur, plus particulièrement de type radio) pour transmettre une telle détection au moteur en vue de sa commande d'arrêt. Un tel mode de réalisation comporte, alors, soit un détecteur de fin de course uniquement conçu pour détecter une telle fin de course, soit un détecteur d'obstacle uniquement conçu pour détecter un tel obstacle.

Il est, encore, connu du document EP-1.245.774 un dispositif de protection sous la forme d'un volet roulant comportant un profilé d'extrémité pourvu d'un moyen, s'étendant sous l'intégralité du bord inférieur du tablier, et conçu, d'une part, pour être déformé sous l'effet d'un contact avec un obstacle et, d'autre part, pour réagir à une telle déformation en émettant et/ou en modifiant un signal électrique apte à commander l'arrêt du moteur d'entraînement du tablier. Ce volet roulant est conçu de telle sorte que cet unique moyen déformable permet de commander l'arrêt du moteur en cas de contact avec obstacle mais également en cas de contact avec le seuil de la porte ou analogue équipée d'un tel volet roulant. En fait, cet unique moyen déformable est associé à des moyens de traitement du signal électrique émis et/ou modifié conçus pour déterminer, en fonction de la nature de ce signal, si il s'agit d'un arrêt sur obstacle ou une fin de course du tablier, ceci à partir d'un signal électrique provenant d'un unique moyen déformable. Ces moyens de traitement du signal sont complexes, peu fiables et ne permettent pas toujours de déterminer avec certitude la nature de l'entité (obstacle, personne, seuil...) avec laquelle le profilé est entré en contact. Etant donné que c'est de la détermination de la nature de cette entité que dépend la réaction du volet roulant (arrêt immédiat de l'entraînement du tablier en cas d'obstacle, déclenchement d'un signal d'alarme...), il est indispensable que cette détermination soit exacte, ce qui n'est pas le cas pour ce dispositif.

La présente invention se veut à même de remédier aux inconvénients des dispositifs de l'état de la technique.

A cet effet, l'invention concerne un profilé d'extrémité équipant un tablier de dispositif de protection du type porte de garage, store, volet roulant, moustiquaire ou analogue, ce profilé d'extrémité comportant, d'une part, deux extrémités latérales dont l'une reçoit un dispositif électrique tandis que l'autre reçoit un second dispositif électrique et, d'autre part, des moyens pour acheminer une information électrique du dispositif électrique équipant une extrémité du profilé au dispositif électrique équipant l'autre extrémité de ce profilé. Ce profilé d'extrémité est caractérisé par le fait qu'il constitue, en soi, au moins un conducteur électrique définissant, au moins en partie, les moyens pour acheminer une information électrique.

Une caractéristique additionnelle consiste en ce que les moyens pour acheminer une information électrique sont constitués par au moins deux conducteurs électriques définis au niveau du profilé d'extrémité ou que comporte ce dernier et s'étendant d'une extrémité à l'autre de ce profilé.

Une autre caractéristique concerne le fait que les conducteurs électriques sont, soit noyés dans l'épaisseur du profilé d'extrémité (notamment dans l'épaisseur d'une paroi de ce profilé), soit rapportés sur le profilé d'extrémité, notamment par sérigraphie, collage, application, projection ou autre.

Cependant et selon une autre caractéristique, l'un au moins des conducteurs électriques est constitué par une partie au moins du profilé d'extrémité lui-même.

Ainsi, un premier conducteur électrique peut être constitué par le profilé d'extrémité lui-même réalisé en un matériau conducteur tandis qu'un second conducteur, isolé du premier conducteur, est, soit noyé dans l'épaisseur de ce profilé, soit engagé à l'intérieur de ce profilé, soit rapporté sur ce profilé.

Finalement, le profilé d'extrémité peut comporter deux portions de profilé, s'étendant, chacune, sur toute la longueur du profilé, isolées électriquement l'une de l'autre, ainsi que des moyens pour raccorder ces portions de profilé entre elles, chacune de ces portions de profilé constituant ou comportant un conducteur électrique des moyens d'acheminement.

Les avantages de la présente invention consistent en ce que le profilé d'extrémité comporte deux dispositifs électriques implantés au niveau de chaque extrémité latérale de ce profilé d'extrémité. Un tel mode de réalisation permet, avantageusement, de prévoir, d'une part et au niveau d'une première extrémité, un dispositif électrique sous la forme d'un détecteur d'obstacle et, d'autre part et au niveau de l'autre extrémité, un dispositif électrique sous la forme d'un détecteur de fin de course.

Cette invention permet, également, de raccorder électriquement ces deux dispositifs par le biais de moyens pour acheminer une information électrique entre ceux-ci. De manière avantageuse, ces moyens d'acheminement sont, au moins en partie, constitués par le profilé d'extrémité lui-même. En effet, ce profilé peut constituer, en soi, un conducteur électrique ou intégrer au moins un tel conducteur électrique. Un tel mode de réalisation permet, avantageusement, d'éviter la mise en place d'un système de câblage à l'intérieur dudit profilé.

Selon un autre avantage de l'invention, la présence des moyens pour acheminer une information électrique permet, avantageusement, de transmettre une information entre deux dispositifs implantés au niveau des deux extrémités d'un même profilé d'extrémité, d'alimenter en énergie électrique ces deux dispositifs à partir d'une même source d'énergie, d'associer ces deux dispositifs à un moyen de transmission unique, voire encore d'associer ces deux dispositifs à des moyens d'analyse et de traitement des signaux émis par ces deux dispositifs.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée d'un volet roulant équipant une porte ou analogue et comportant un profilé d'extrémité conforme à l'invention ;
- la figure 2 est une vue schématisée et en coupe transversale d'un profilé correspondant à un premier mode de réalisation pour lequel les conducteurs sont noyés dans l'épaisseur du profilé d'extrémité ;
- la figure 3 est une vue schématisée et en coupe transversale d'un profilé correspondant à un deuxième mode de réalisation pour lequel le profilé est réalisé en un matériau conducteur et comporte un conducteur noyé dans son épaisseur ;
- la figure 4 est une vue schématisée et en coupe transversale d'un premier mode de réalisation d'un profilé comportant deux portions conductrices de profilé constituées par les parois avant et arrière de ce profilé ;
- la figure 5 est une vue schématisée et en perspective d'un deuxième mode de réalisation d'un profilé comportant deux portions conductrices de profilé constituées par des lames conductrices enfilées et revêtues d'un revêtement isolant ;
- la figure 6 est une vue schématisée et en perspective d'un troisième mode de réalisation d'un profilé comportant deux portions conductrices de profilé sous forme de lames conductrices raccordées par un profilé isolant.

La présente invention concerne le domaine de la fabrication des dispositifs pour équiper un bâtiment, plus particulièrement une habitation, et conçus pour conférer une certaine protection à ce bâtiment, à ses alentours et/ou à des personnes qui fréquentent ce bâtiment.

A ce propos, dans la suite de la description, il sera, plus particulièrement, fait référence à un dispositif de protection 1 contre l'intrusion ou contre la lumière du jour et adoptant la forme d'un volet roulant ou analogue, équipant une ouverture 2 définie au niveau de la maçonnerie d'un bâtiment et venant défiler à l'avant d'une porte 3, fenêtre ou analogue.

Il convient, cependant, d'observer que la présente invention n'est aucunement limitée à un tel dispositif mais concerne, également, un dispositif de protection contre le rayonnement solaire et pouvant adopter la forme d'un store ou analogue. Un tel dispositif peut, encore, concerner un dispositif de protection contre les animaux nuisibles, notamment les moustiques, les arachnides (plus particulièrement les araignées) ou autres, et pouvant adopter la forme d'une moustiquaire ou similaire.

Quoi qu'il en soit, un tel dispositif de protection 1 comporte un tablier 4 qui, dans le cas d'un volet roulant ou d'une porte de garage, est constitué, au moins en partie, par une juxtaposition d'une pluralité de lames 5 (notamment assemblées par emboîtement et/ou enfilées les unes dans les autres) et qui, dans le cas d'un store, d'une moustiquaire ou analogue se présente sous la forme d'un élément souple, plus particulièrement une pièce de tissu ou autre.

Ce dispositif de protection 1 comporte, également, un moyen 6 pour le déploiement et pour le repliement de ce tablier 4.

A ce propos, il convient d'observer qu'un tel moyen de déploiement/repliement 6 se présente, usuellement mais de manière non limitative, sous la forme d'un arbre 7 sur lequel est enroulé et à partir duquel est déroulé ledit tablier 4. Dans le cas particulier d'un volet roulant, cet arbre 7 est, généralement, implanté dans un coffre 8 surmontant la porte 3, fenêtre ou autre, équipée dudit dispositif de protection 1.

Ce dispositif de protection 1 comporte, encore, un moteur 9, plus particulièrement de type électrique, pour l'entraînement de ce moyen 6 de déploiement/repliement dudit tablier 4. Là encore et dans le cas d'un volet roulant, ce moteur 9 peut, avantageusement, être implanté dans ledit coffre 8 à l'intérieur duquel est, alors, replié ledit tablier 4.

En fait, ce tablier 4 présente, d'une part, une première extrémité rendue solidaire dudit moyen 6 de déploiement/repliement et, d'autre part, une seconde extrémité 10, dite extrémité libre, pourvue d'un profilé d'extrémité 11 qui s'étend au moins en partie le long du bord de cette seconde extrémité 10 du tablier 4 et qui est, usuellement (et, plus particulièrement, dans le cas d'un volet roulant), dénommé lame finale.

Ce profilé d'extrémité 11 présente deux extrémités latérales 12, 12A qui, au moins dans le cas d'un volet roulant, sont susceptibles de se déplacer dans des coulisses latérales 13, 13A que comporte le dispositif de protection 1.

Selon l'invention, chacune de ces extrémités latérales 12 ; 12A reçoit un dispositif électrique 14 ; 14A qui, selon un mode de réalisation préféré de l'invention, est engagé à l'intérieur d'une cavité 15 que présente un tel profilé d'extrémité 11 au moins au niveau de ses extrémités 12, 12A mais, plus usuellement, sur tout la longueur de ce profilé 11.

A ce propos, il convient d'observer qu'un mode de réalisation préféré consiste en ce que le dispositif électrique 14 équipant une extrémité latérale 12 du profilé d'extrémité 11 est constitué par un dispositif de détection d'obstacle tandis que le dispositif électrique 12A, équipant l'autre extrémité latérale 12A du profilé 11, est constitué par un dispositif de détection de fin de course.

Selon une autre caractéristique de l'invention, ce profilé d'extrémité 11 comporte des moyens 16 pour acheminer une information électrique du dispositif électrique 14 équipant une extrémité latérale 12 de ce profilé 11 au dispositif électrique 14A équipant l'autre extrémité latérale 12A de ce profilé 11.

Un premier mode de réalisation non représenté peut consister en ce que de tels moyens 16 d'acheminement sont constitués par un ou plusieurs conducteurs électriques, adoptant la forme d'un ou plusieurs câbles électriques ou analogue, et s'étendant à l'intérieur dudit profilé 11, plus particulièrement à l'intérieur de la cavité 15 de ce dernier 11, ceci d'une extrémité 12 à l'autre 12A de ce profilé 11.

Cependant et selon un mode de réalisation préféré de l'invention, le profilé d'extrémité 11 constitue, en soi, au moins un conducteur électrique 17, 17A définissant, au moins en partie, les moyens 16 pour acheminer une information électrique.

A ce propos, on observera que ces moyens 16 pour acheminer une information électrique sont, en fait, constitués par au moins deux conducteurs électriques 17, 17A définis au niveau du profilé d'extrémité 11 ou que comporte ce dernier 11, ces conducteurs électriques 17, 17A s'étendant d'une extrémité 12 à l'autre 12A de ce profilé 11.

Selon un premier mode de réalisation non représenté, le profilé d'extrémité 11 comporte de tels moyens 16 d'acheminement constitués par deux conducteurs électriques rapportés sur ce profilé d'extrémité 11, notamment par sérigraphie, collage, application, projection ou autre. Ce profilé d'extrémité 11 est, alors, réalisé en un matériau non conducteur ou revêtu d'un revêtement non conducteur.

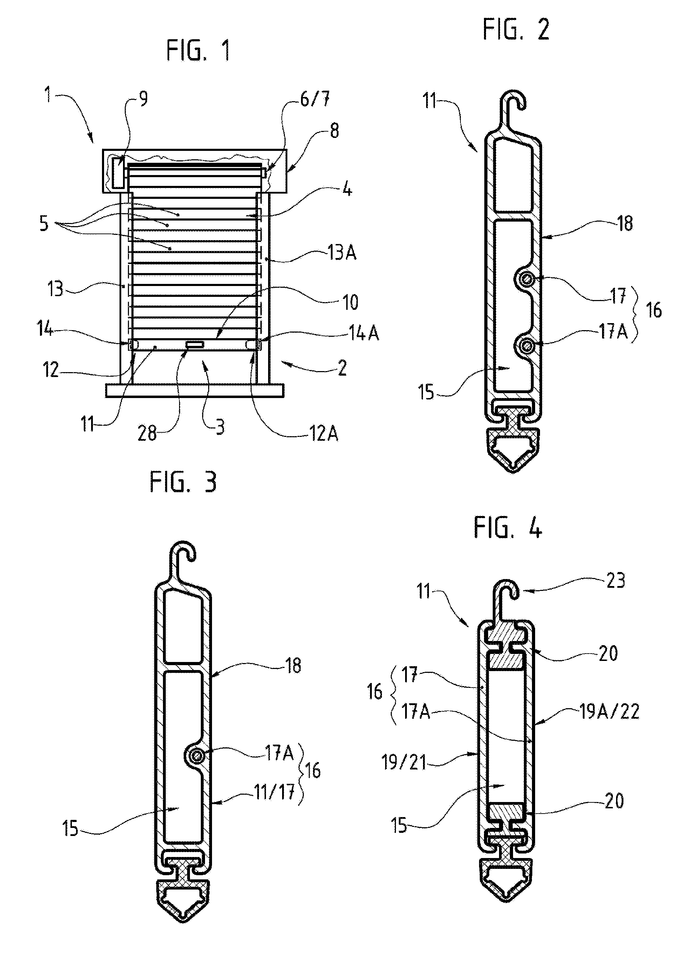

Selon un autre mode de réalisation de l'invention illustré figure 2, le profilé d'extrémité 11 comporte des moyens 16 d'acheminement constitués par des conducteurs électriques 17, 17A noyés dans l'épaisseur du profilé d'extrémité 11, notamment dans l'épaisseur d'une paroi 18 de ce profilé 11.

En fait, ces conducteurs 17, 17A peuvent être noyés dans une telle paroi 18 lors de la fabrication d'un tel profilé, plus particulièrement lors d'une opération de profilage ou d'extrusion de ce profilé 11.

Selon un autre type de réalisation, au moins un de ces deux conducteurs 17, 17A est constitué par une partie au moins du profilé d'extrémité 11 lui-même réalisée en un matériau conducteur électrique.

Dans un pareil cas et tel que visible figure 3, un premier conducteur électrique 17 est constitué par le profilé d'extrémité 11 lui-même réalisé en un matériau conducteur tandis qu'un second conducteur 17A, isolé électriquement du premier conducteur 17, est noyé dans l'épaisseur de ce profilé 11, notamment de la manière susmentionnée.

Selon un autre mode de réalisation non représenté, le second conducteur 17A peut être engagé à l'intérieur de ce profilé 11 (notamment dans la cavité 15 susmentionnée) et adopter, par exemple, la forme d'un câble électrique ou analogue joignant les deux extrémités 12, 12A.

Encore un autre mode de réalisation consiste en ce que ce second conducteur 17A peut être rapporté sur ce profilé 11 de la manière susmentionnée.

Cependant et selon un type de réalisation préféré de l'invention, les deux conducteurs 17, 17A sont constitués par le profilé d'extrémité 11 lui-même réalisé en un matériau conducteur électrique. Plus précisément, chacun de ces conducteurs 17 ; 17A est constitué par une partie au moins de ce profilé d'extrémité 11.

Pour ce faire, le profilé d'extrémité 11 comporte deux portions 19, 19A de profilé 11, s'étendant, chacune, sur toute la longueur du profilé 11, isolées électriquement l'une 19 de l'autre 19A. Chacune de ces portions 19 ; 19A de profilé 11 constitue ou comporte un conducteur électrique 17 ; 17A des moyens d'acheminement 16.

Ce profilé 11 comporte, alors, également, des moyens 20 pour raccorder mécaniquement ces portions 19, 19A de profilé 11 entre elles.

Il a été représenté figure 4 un premier mode de réalisation dans lequel les portions 19 ; 19A de profilé 11 sont constituées par les parois conductrices avant 21 et arrière 22 du profilé d'extrémité 11. Les moyens de raccordement mécanique 20 peuvent alors comporter ou être constitués, au moins en partie, par des moyens d'accrochage 23 mâle et/ou femelle de ce profilé 11 à un élément du tablier 4, notamment une lame de ce tablier 4.

Il convient d'observer que, dans un pareil cas, les portions 19, 19A de profilé 11 et les moyens de raccordement mécanique 20 peuvent être réalisés par coextrusion.

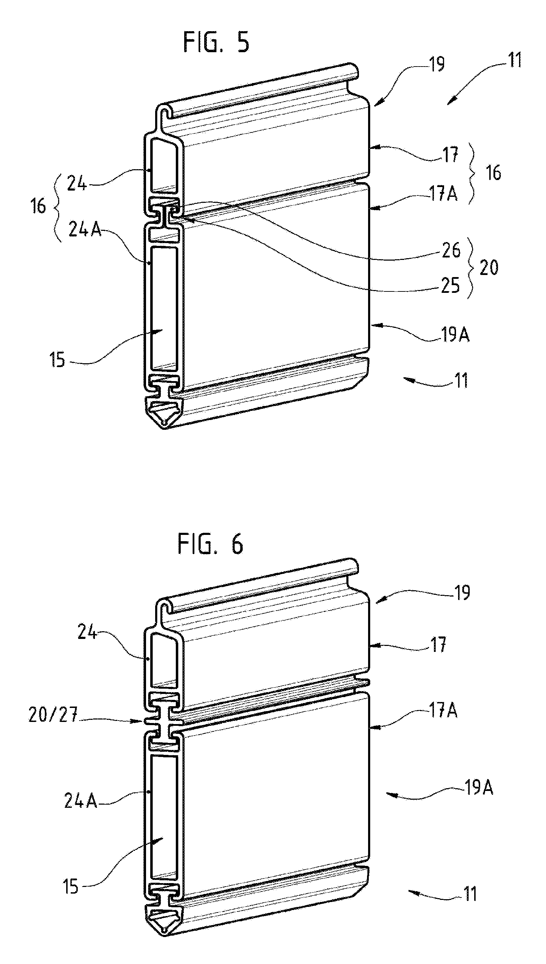

Selon un autre mode de réalisation illustré figure 5, les portions 19 ; 19A de profilé 11 sont constituées par des lames conductrices 24 ; 24A dont l'une au moins est revêtue d'un revêtement isolant électrique conçu pour isoler électriquement les portions 19, 19A de profilé 11 l'une 19 de l'autre 19A. Dans un pareil cas, les moyens de raccordement mécanique 20 sont constitués, d'une part, par des moyens d'accrochage 25 définis au niveau de l'une 24 de ces lames et, d'autre part, par des moyens d'accrochage complémentaires 26 définis au niveau de l'autre lame 24A et conçus pour coopérer avec lesdits moyens d'accrochage 25 pour un assemblage des deux portions 19 ; 19A de profilé 11.

En ce qui concerne le revêtement isolant, celui-ci est appliqué au moins au niveau de la jonction entre les deux lames conductrices 24, 24A, plus particulièrement au niveau des moyens de raccordement mécanique 20. Un tel revêtement isolant est, en fait, appliqué sur l'une au moins des deux lames 24, 24A, voire (et de préférence) sur ces deux lames 24, 24A.

Ce revêtement isolant électrique peut être constitué par au moins une couche d'un matériau isolant électrique, plus particulièrement constitué par un matériau polymère, notamment un polymère chloré (par exemple du PVC ou autre), un polyamide ou analogue.

Selon un autre mode de réalisation illustré figure 6, les portions 19 ; 19A de profilés 11 sont constituées par des lames 24 ; 24A conductrices raccordées entres elles par des moyens de raccordement mécanique 20 de type isolant, notamment constitués par un profilé 27 réalisé en un matériau non conducteur.

Selon une autre caractéristique de l'invention, les moyens de raccordement mécanique 20 sont conçus pour assurer un assemblage par enfilage, soit d'un tel profilé d'extrémité 11 avec un autre élément du tablier 4 (figure 4), soit des deux portions 19, 19A de profilé d'extrémité 11 (figures 5 et 6), notamment par l'intermédiaire du profilé 27 susmentionné (figure 6).

Encore une autre caractéristique de l'invention consiste en ce que le profilé d'extrémité 11 comporte des moyens 28 pour la transmission d'une commande d'arrêt au moteur d'entraînement 9 du tablier 4, ceci en cas de détection d'un obstacle ou d'une fin de course par les dispositifs électriques 14, 14A.

Selon un premier mode de réalisation, de tels moyens de transmission 28 peuvent être propres à chacun des dispositifs électriques 14, 14A. Cependant et selon un mode de réalisation préféré de l'invention, ces moyens de transmission 28 sont communs à ces dispositifs électriques 14, 14A et sont raccordés à ces derniers, plus particulièrement par le biais des moyens 16 d'acheminement de l'information électrique.

L'invention concerne, encore, un dispositif de protection constitué par un store, une moustiquaire ou analogue et comportant un tablier au moins en partie constitué par une pièce en tissu ou autre. Ce dispositif de protection comporte, alors, un profilé d'extrémité de tablier présentant les caractéristiques du profilé d'extrémité 11 décrit ci-dessus.

En outre, l'invention concerne, également, un dispositif de protection 1 constitué par une porte de garage, par un volet roulant ou analogue et comportant un tablier 4 au moins en partie constitué par une juxtaposition d'une pluralité de lames 5, notamment assemblées par emboîtement et/ou enfilées les unes dans les autres. Un tel dispositif de protection 1 comporte, alors, un profilé d'extrémité 11 de tablier 4 présentant les caractéristiques du profilé d'extrémité 11 décrit ci-dessus.

## Revendications

1. Profilé d'extrémité (11) équipant un tablier (4) de dispositif de protection (1) du type porte de garage, store, volet roulant, moustiquaire ou analogue, ce profilé d'extrémité (11) comportant, d'une part, deux extrémités latérales (12; 12A) dont l'une (12) reçoit un dispositif électrique (14) tandis que l'autre (12A) reçoit un second dispositif électrique (14A) et, d'autre part, des moyens (16) pour acheminer une information électrique du dispositif électrique (14) équipant une extrémité (12) du profilé (11) au dispositif électrique (14A) équipant l'autre extrémité (12A) de ce profilé (11), **caractérisé par le fait que** le profilé d'extrémité (11) constitue, en soi, au moins un conducteur électrique (17; 17A) définissant, au moins en partie, les moyens (16) pour acheminer une information électrique.

2. Profilé d'extrémité (11) de tablier (4) de dispositif de protection (1) selon la revendication 1, **caractérisé par le fait que** les moyens (16) pour acheminer une information électrique sont constitués par au moins deux conducteurs électriques (17; 17A) définis au niveau du profilé d'extrémité (11) ou que comporte ce dernier (11) et s'étendant d'une extrémité (12) à l'autre (12A) de ce profilé (11).

3. Profilé d'extrémité (11) de tablier (4) de dispositif de protection (1) selon la revendication 2, **caractérisé par le fait qu'**un premier conducteur électrique (17) est constitué par le profilé d'extrémité (11) lui-même réalisé en un matériau conducteur tandis qu'un second conducteur (17A), isolé du premier conducteur (17), est, soit noyé dans l'épaisseur de ce profilé (11), soit engagé à l'intérieur de ce profilé (11), soit rapporté sur ce profilé (11).

4. Profilé d'extrémité (11) de tablier (4) de dispositif de protection (1) selon l'une quelconque des revendications précédentes, **caractérisé par le fait que** le profilé d'extrémité (11) comporte deux portions (19; 19A) de profilé (11), s'étendant, chacune, sur toute la longueur du profilé (11), isolées électriquement l'une (19) de l'autre (19A), ainsi que des moyens (20) pour raccorder mécaniquement ces portions (19; 19A) de profilé (11) entre elles, chacune de ces portions (19; 19A) de profilé (11) constituant ou comportant un conducteur électrique (17; 17A) des moyens d'acheminement (16).

5. Profilé d'extrémité (11) de tablier (4) de dispositif de protection (1) selon la revendication 4, **caractérisé par le fait que** les portions (19; 19A) de profilé (11) sont constituées par les parois conductrices avant (21) et arrière (22) du profilé d'extrémité (11) tandis que les moyens (20) de raccordement mécanique comportent ou sont constitués, au moins en partie, par des moyens d'accrochage (23) mâle et/ou femelle à un élément du tablier (4), notamment une lame.

6. Profilé d'extrémité (11) de tablier (4) de dispositif de protection (1) selon la revendication 5, **caractérisé par le fait que** les portions (19; 19A) de profilé (11) et les moyens (20) de raccordement mécanique sont réalisés par coextrusion.

7. Profilé d'extrémité (11) de tablier (4) de dispositif de protection (1) selon la revendication 4, **caractérisé par le fait que** les portions (19; 19A) de profilé sont constituées par des lames conductrices (24; 24A) dont l'une au moins est revêtue d'un revêtement isolant électrique tandis que les moyens (20) de raccordement mécanique sont constitués, d'une part, par des moyens d'accrochage (25) définis au niveau de l'une de ces lames (24) et, d'autre part, par des moyens d'accrochage complémentaires (26) définis au niveau de l'autre lame (24A) et conçus pour coopérer avec lesdits moyens d'accrochage (25) pour un assemblage des deux portions (19; 19A) de profilé (11).

8. Profilé d'extrémité (11) de tablier (4) de dispositif de protection (1) selon la revendication 7, **caractérisé par le fait que** le revêtement isolant électrique est constitué par au moins une couche d'un matériau isolant électrique, plus particulièrement constitué par un matériau polymère, notamment un polymère chloré, un polyamide ou analogue.

9. Profilé d'extrémité (11) de tablier (4) de dispositif de protection (1) selon la revendication 4, **caractérisé par le fait que** les portions (19; 19A) de profilés (11) sont constituées par des lames conductrices (24; 24A) raccordées entres elles par des moyens (20) de raccordement mécanique de type isolant, notamment constitués par un profilé (27) réalisé en un matériau non conducteur.

10. Profilé d'extrémité (11) de tablier (4) de dispositif de protection (1) selon l'une quelconque des revendications 4 à 9, **caractérisé par le fait que** les moyens de raccordement mécanique (20) sont conçus pour assurer un assemblage par enfilage, selon le cas, des deux portions (19; 19A) de profilé d'extrémité (11) ou d'un tel profilé d'extrémité (11) avec un autre élément du tablier (4).

11. Profilé d'extrémité (11) de tablier (4) de dispositif de protection (1) selon l'une quelconque des revendications précédentes, **caractérisé par le fait que** le dispositif électrique (14) équipant une extrémité latérale (12) du profilé d'extrémité (11) est constitué par un dispositif de détection d'obstacle tandis que le dispositif électrique (14A) équipant l'autre extrémité latérale (12A) est constitué par un dispositif de détection de fin de course.

12. Profilé d'extrémité (11) de tablier (4) de dispositif de protection (1) selon l'une quelconque des revendications précédentes, **caractérisé par le fait que** le profilé (11) comporte des moyens (28) pour la transmission d'une commande d'arrêt à un moteur d'entraînement (9) du tablier (4) que comporte le dispositif de protection (1), ces moyens de transmission (28) étant raccordés auxdits dispositifs électriques (14; 14A) par l'intermédiaire des moyens d'acheminement (16) d'une information électrique.

13. Dispositif de protection (11) constitué par un store, une moustiquaire ou analogue et comportant un tablier (4) au moins en partie constitué par une pièce en tissu ou autre, **caractérisé par le fait qu'**il comporte un profilé d'extrémité (11) de tablier (4) conforme à l'une quelconque des revendications précédentes.

14. Dispositif de protection (11) constitué par une porte de garage, par un volet roulant ou analogue et comportant un tablier (4) au moins en partie constitué par une juxtaposition d'une pluralité de lames (5), notamment assemblées par emboîtement et/ou enfilées les unes dans les autres, **caractérisé par le fait qu'**il comporte un profilé d'extrémité (11) de tablier (4) conforme à l'une quelconque des revendications 1 à 12.
